# EUROPÄISCHE PATENTSCHRIFT

(11) **EP 3 881 346 B1**
(45) Veröffentlichungstag und Bekanntmachung des Hinweises auf die Patenterteilung: **20.12.2023**
(21) Anmeldenummer: 19794539.7
(22) Anmeldetag: 25.10.2019
(51) Int. Cl.: H01H 47/22, H01H 47/32

(54) **STEUERSCHALTUNG**
CONTROL CIRCUIT
CIRCUIT DE COMMANDE

(30) Priorität: 13.11.2018 DE 102018128328
(43) Veröffentlichungstag der Anmeldung: 22.09.2021
(73) Patentinhaber: Phoenix Contact GmbH & Co. KG, 32825 Blomberg (DE)
(72) Erfinder: REIMCHEN, Eugen, 32839 Steinheim (DE); TASCHE, Ingo, 32657 Lemgo (DE); LOHRE, Ludger, 32839 Steinheim (DE)
(74) Vertreter: Patentship Patentanwaltsgesellschaft mbH
(86) Internationale Anmeldenummer: PCT/EP2019/079158
(87) Internationale Veröffentlichungsnummer: WO 2020/099100

(56) Entgegenhaltungen:
- EP-A1- 3 118 877
- FR-A1- 2 406 884
- US-A1- 2014 211 363

## Beschreibung

Die vorliegende Erfindung betrifft eine Steuerschaltung zum Steuern eines bistabilen Relais und eine Schaltungsanordnung mit einer Steuerschaltung.

Beim Schalten eines Relais wechselt das Relais von einem ersten Schaltzustand in einen zweiten Schaltzustand. Bei einem normalen Relais ist dieser Zustand vorübergehend, d. h. nach Wegfallen eines Schaltsignals wechselt das Relais wieder in den ursprünglichen Zustand zurück.

Ein bistabiles Relais wechselt hingegen nicht automatisch zurück. Ein bistabiles Relais kann durch ein Schaltsignal in einen ersten Schaltzustand versetzt werden. Nach Wegfall des Schaltsignals verweilt das bistabile Relais in dem ersten Schaltzustand. Um das bistabile Relais wieder in den ursprünglichen Schaltzustand zurückzuschalten, ist ein weiteres Schaltsignal notwendig.

Bei einem Stromausfall kann vorkommen, dass ein bistabiles Relais in dem aktuellen Schaltzustand verweilt und nicht geschaltet werden kann. Dient das bistabile Relais hierbei einer sicherheitsrelevanten Aufgabe, so kann das Verbleiben in dem aktuellen Schaltzustand ein Sicherheitsrisiko darstellen.

Die Druckschrift FR 2 406 884 A1 offenbart eine Schaltungsanordnung zur Ansteuerung eines bistabilen Relais, dessen Erregerspule mit einem Kondensator in Serie liegt. Bei der Schaltungsanordnung wird die Serienschaltung von Erregerspule und Kondensator zur Erregung des Relais und gleichzeitigen Aufladung des Kondensators an die Erregerspannung gelegt.

Die Druckschrift US 2014 / 0 211 363 A1 offenbart eine Treiberschaltung zum Treiben der Leistung zu einer Last unter Verwendung eines Mikrocontrollers und einer Relaisschaltung. Die Relaisschaltung ist als ein sogenanntes "latching relay" bzw. Kipprelais ausgebildet.

Es ist eine Aufgabe der Erfindung, ein Konzept aufzuzeigen, ein bistabiles Relais sicher zu schalten.

Diese Aufgabe wird durch die Merkmale der Gegenstände der unabhängigen Ansprüche gelöst. Vorteilhafte Ausführungsformen sind Gegenstand der abhängigen Ansprüche, der Beschreibung sowie der beiliegenden Figuren.

Die vorliegende Erfindung basiert auf der Erkenntnis, dass durch eine Steuerschaltung ein Ladestrom bzw. Entladestrom eines Energiespeichers zum Schalten eines bistabilen Relais verwendet werden kann.

Gemäß einem ersten Aspekt wird die Aufgabe durch eine Steuerschaltung zum Steuern eines bistabilen Relais gelöst, wobei das bistabile Relais einen ersten Schaltzustand und einen zweiten Schaltzustand aufweist, wobei die Steuerschaltung von einer Versorgungsspannung versorgbar ist. Die Steuerschaltung umfasst ein erstes Schaltelement und ein zu dem ersten Schaltelement in Reihe angeordnetes zweites Schaltelement und einen Schaltungszweig mit einem Energiespeicher, wobei der Schaltungszweig parallel zu dem zweiten Schaltelement angeordnet ist und wobei das bistabile Relais in dem Schaltungszweig anordenbar ist. Das erste Schaltelement ist eingerichtet, einen Ladestrom des Energiespeichers durch das bistabile Relais zu führen, wenn die Versorgungsspannung an der Steuerschaltung anliegt, um das bistabile Relais in den zweiten Schaltzustand zu versetzen. Das zweite Schaltelement ist eingerichtet, einen Entladestrom des Energiespeichers durch das bistabile Relais zu führen, wenn die Versorgungsspannung von der Steuerschaltung getrennt ist, um das bistabile Relais in den ersten Schaltzustand zu versetzen.

Die Steuerschaltung stellt eine Vorbeschaltung eines bistabilen Relais dar. Das bistabile Relais kann hierbei auf ein Relaismodul aufgesteckt sein, beispielsweise ein steckbares kompaktes Modul, engl. plugable compact module, kurz PLC Modul. Ein solches PLC-14-mm-Modul kann mit einem gewöhnlichen Relais, insbesondere einem RT-Relais, beispielsweise einen Stromverbrauch von 20 mA bei 24 V haben, was einer Leistung von 0,48 W entspricht. Die Spule des gewöhnlichen Relais muss hierbei dauerhaft bestromt werden, um das Magnetfeld aufrechtzuerhalten und das Relais in dem zweiten Schaltzustand zu erhalten.

Durch die Verwendung eines bistabilen Relais wird der Stromverbrauch deutlich reduziert. Beispielsweise liegt der Stromverbrauch bei 0,048 W, was lediglich 10% im Vergleich zu einem normalen Relais entspricht. Durch die Steuerschaltung wird die sichere Rückschaltung des Relais gewährleistet. Daher kann das stromsparendere bistabile Relais anstatt eines gewöhnlichen Relais eingesetzt werden.

In einer Ausgestaltung umfasst die Steuerschaltung eine Diode, die dem ersten Schaltelement und dem zweiten Schaltelement vorgeschaltet ist.

Die Diode kann hierbei zwischen einem Anschluss der Versorgungsspannung und dem ersten Schaltelement angeordnet sein. Die Diode kann einen Rückstrom in eine Versorgungsspannungsquelle verhindern.

Erfindungsgemäß umfasst die Steuerschaltung eine Überwachungsschaltung, die eingerichtet ist, einen Wegfall der Versorgungsspannung zu erfassen und hierauf das erste Schaltelement und das zweite Schaltelement zu schalten.

Die Überwachungsschaltung kann mit einem Anschluss der Versorgungsspannung verbunden sein, um zu überwachen, ob die Versorgungsspannung an der Steuerschaltung anliegt. Die Überwachungsschaltung kann mit einem ersten Steuereingang des ersten Schaltelements, insbesondere einem Gate-Anschluss des ersten Schaltelements, und einem zweiten Steuereingang des zweiten Schaltelements, insbesondere einem Gate-Anschluss des zweiten Schaltelements, elektrisch verbunden sein. Erfasst die Überwachungsschaltung, dass die Versorgungsspannung unterbrochen ist, so wird von der Überwachungsschaltung der erste Steuereingang und der zweite Steuereingang angesteuert, um das erste Schaltelement und das zweite Schaltelement umzuschalten. Hierbei kann ein Strompfad von dem bistabilen Relais durch das erste Schaltelement unterbrochen werden und ein anderer Strompfad von dem bistabilen Relais durch das zweite Schaltelement eröffnet werden. Die im Energiespeicher gespeicherte Energie kann sich entladen und durch den Entladestrom das bistabile Relais zurückschalten in den ersten Schaltzustand des bistabilen Relais.

In einer Ausgestaltung umfasst die Überwachungsschaltung ein drittes Schaltelement, das eingerichtet ist, das erste Schaltelement und das zweite Schaltelement zu schalten, wenn die Versorgungsspannung von der Steuerschaltung getrennt wird.

Das dritte Schaltelement kann ein MOSFET oder ein Bipolartransistor sein. Ein dritter Steuereingang des dritten Schaltelements kann mit der Versorgungsspannung verbunden sein, um das dritte Schaltelement zu schalten, wenn die Versorgungsspannung wegfällt bzw. angelegt wird. Das dritte Schaltelement kann ein Potential an dem ersten Steuereingang des ersten Schaltelements und dem zweiten Steuereingang des zweiten Schaltelements beeinflussen. Das Potential an dem ersten Steuereingang des ersten Schaltelements und dem zweiten Steuereingang des zweiten Schaltelements kann gegen Masse gezogen sein, wenn die Versorgungsspannung an der Steuerschaltung anliegt. Entfällt die Versorgungsspannung, beispielsweise bei einem Stromausfall, so wird das dritte Schaltelement abgeschaltet und somit werden das erste Schaltelement und das zweite Schaltelement geschaltet. Insbesondere wird das erste Schaltelement sperrend geschaltet und das zweite Schaltelement leitend geschaltet. Somit wird sichergestellt, dass der Entladestrom des Energiespeichers durch das bistabile Relais und das zweite Schaltelement abfließen kann und hierbei das bistabile Relais von dem zweiten Schaltzustand in den ersten Schaltzustand zurückschaltet.

Erfindungsgemäß umfasst die Überwachungsschaltung einen weiteren Energiespeicher, der eingerichtet ist, eine Energie zum Schalten des ersten Schaltelements und des zweiten Schaltelements bereitzustellen.

Der weitere Energiespeicher kann ein Kondensator sein, der beispielsweise eine Kapazität von 4,7 µF aufweist. Der weitere Energiespeicher kann an dem ersten Steuereingang des ersten Schaltelements und dem zweiten Steuereingang des zweiten Schaltelements eine Spannung anlegen, wenn das dritte Schaltelement so geschaltet ist, dass der erste Steuereingang des ersten Schaltelements und der zweite Steuereingang des zweiten Schaltelements nicht auf Masse gezogen sind.

In einer Ausgestaltung umfasst die Steuerschaltung eine Anzeigeeinrichtung, die eingerichtet ist, den zweiten Schaltzustand des bistabilen Relais anzuzeigen, insbesondere anzuzeigen, wenn das bistabilen Relais eingeschaltet ist.

Die Anzeigeeinrichtung kann eine lichtemittierende Diode, LED, umfassen. Die Anzeigeeinrichtung kann von der Versorgungsspannung versorgt werden. Solange die Versorgungsspannung an der Steuerschaltung anliegt, ist das bistabile Relais in den zweiten Schaltzustand geschaltet und die Anzeigeeinrichtung kann mit Energie versorgt werden und anzeigen, dass sich das bistabile Relais in dem zweiten Schaltzustand befindet. Fällt die Versorgungsspannung weg, so kann, wie oben beschrieben, das bistabile Relais in den ersten Schaltzustand geschaltet werden. Durch den Wegfall der Versorgungsspannung kann die Anzeigeeinrichtung nicht mehr mit Energie versorgt werden, d.h. beispielsweise kein Licht aussenden, und so anzeigen, dass das bistabile Relais in den ersten Schaltzustand geschaltet ist.

In einer Ausgestaltung umfasst der Energiespeicher einen Kondensator. Der Kondensator kann so groß sein, dass ein Ladestrom bzw. Entladestrom ausreicht, das bistabile Relais zu schalten. Beispielsweise ist der Kondensator des Energiespeichers 100 µF groß.

In einer Ausgestaltung sind das erste Schaltelement und das zweite Schaltelement jeweils ein MOSFET oder ein Bipolartransistor.

Ein Metall-Oxid-Halbleiter-Feldeffekttransistor, MOSFET, ist ein Spannungsgesteuertes Schaltelement. Die Leistungsaufnahme kann hierbei geringer sein, als bei anderen Schaltelementen.

In einer Ausgestaltung sind das erste Schaltelement und das zweite Schaltelement gleichzeitig schaltbar angeordnet, wobei das erste Schaltelement und das zweite Schaltelement unterschiedliche Schaltzustände aufweisen.

Ein Potential an dem ersten Steuereingang des ersten Schaltelements und dem zweiten Steuereingang des zweiten Schaltelements kann gleich sein. Der erste Steuereingang des ersten Schaltelements kann mit dem zweiten Steuereingang des zweiten Schaltelements elektrisch verbunden sein. Hierbei kann durch ein Schaltsignal, beispielsweise das Anlegen einer Spannung, insbesondere von dem weiteren Schaltelement, das erste Schaltelement und das zweite Schaltelement gleichzeitig geschaltet werden. Das erste Schaltelement kann leitend geschaltet sein, wenn die Versorgungsspannung an der Steuerschaltung anliegt und das zweite Schaltelement kann sperrend geschaltet sein, wenn die Versorgungsspannung an der Steuerschaltung anliegt. Fällt die Versorgungsspannung weg, können das erste Schaltelement und das zweite Schaltelement zusammen geschaltet werden, sodass das erste Schaltelement sperrt und das zweite Schaltelement leitet.

Gemäß einem zweiten Aspekt wird die Aufgabe durch eine Schaltungsanordnung mit einer Steuerschaltung nach dem ersten Aspekt und einem bistabilen Relais gelöst, wobei das bistabile Relais mit der Steuerschaltung elektrisch verbunden ist, sodass das bistabile Relais von dem zweiten Schaltzustand in den ersten Schaltzustand versetzt wird, wenn die Versorgungsspannung von der Steuerschaltung getrennt wird.

Eine Schaltungsanordnung, die die Steuerschaltung der oben beschriebenen Art umfasst, kann ein sicheres Umschalten eines bistabilen Relais sicherstellen, auch wenn eine Versorgungsspannung unterbrochen wird.

In einer Ausgestaltung umfasst die Schaltungsanordnung ein Relaismodul, wobei das Relaismodul die Steuerschaltung umfasst und das bistabile Relais an dem Relaismodul angeordnet ist.

Das Relaismodul kann ein 14 mm Modul sein und eingerichtet sein, auf eine Tragschiene aufgesteckt zu werden.

In einer Ausgestaltung ist das bistabile Relais lösbar auf das Relaismodul aufgesteckt.

Ist das bistabile Relais lösbar auf das Relaismodul gesteckt, kann es bei einer Wartung ausgetauscht werden.

In einer Ausgestaltung ist das bistabile Relais einspulig. Dies kann einen einfachen Aufbau des Relaismoduls gewährleisten.

In einer Ausgestaltung umfasst das bistabile Relais zwei Kontaktsätze, das heißt zwei Wechselkontakte. Das bistabile Relais kann zwei oder mehr Kontaktsätze als zu schaltende Ausgänge umfassen, um zwei oder mehr Leitungen zu schalten.

In einer Ausgestaltung ist der erste Schaltzustand ein Aus-Zustand und der zweite Schaltzustand ein Betriebszustand. Das bistabile Relais kann in den ersten Schaltzustand geschaltet werden, d.h. ausgeschaltet werden. Somit ist sichergestellt, dass das bistabile Relais bei einem Stromausfall, das heißt bei einem Wegfall der Versorgungsspannung, ausgeschaltet wird.

Die Erfindung wird im Folgenden anhand von Ausführungsbeispielen und Figuren weiter erläutert. Es zeigen:
- Fig. 1: eine schematische Darstellung einer Schaltungsanordnung gemäß einem Ausführungsbeispiel; und
- Fig. 2: eine schematische Schaltungsanordnung einer Steuerschaltung gemäß einem Ausführungsbeispiel.

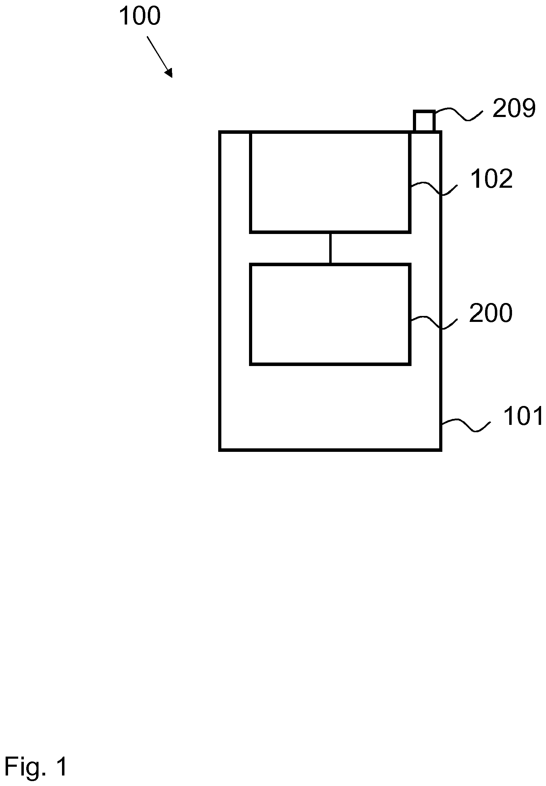

Fig. 1 zeigt eine Schaltungsanordnung 100 mit einem Relaismodul 101. Das Relaismodul 101 ist im gezeigten Ausführungsbeispiel ein PLC-14-mm-Modul zum Aufstecken auf eine tragschiene, insbesondere eine Schaltleiste. In dem Relaismodul 101 ist ein bistabiles Relais 102 angeordnet. Das bistabile Relais 102 weist zwei Kontaktsätze auf, um zwei Strompfade zu schalten. In einem weiteren Ausführungsbeispiel weist das bistabile Relais 102 eine hiervon abweichende Anzahl an Kontaktsätzen auf. Das bistabile Relais 102 weist einen ersten Schaltzustand auf, in dem die Kontaktsätze unterbrochen sind und einen zweiten Schaltzustand, in dem die Kontaktsätze geschlossen sind und leiten. Der erste Schaltzustand stellt daher einen sicheren Zustand dar, da ein Strom in zu schaltenden Leitungen unterbrochen ist.

Das Relaismodul 101 weist weiterhin eine Steuerschaltung 200 auf. Die Steuerschaltung 200 stellt sicher, dass das bistabile Relais 102 auch bei Stromausfall eine Schaltung in den sicheren Zustand durchführen kann. Insbesondere wird hierbei das bistabile Relais 102 von dem zweiten Schaltzustand in den ersten Schaltzustand versetzt. In einem anderen Ausführungsbeispiel kann die Steuerschaltung 200 eingerichtet sein, das bistabile Relais 102 umgekehrt zu schalten. Die Steuerschaltung 200 weist eine Anzeigeeinrichtung 209 auf, die eingerichtet ist, anzuzeigen, wie das Relais 102 geschaltet ist. Die Anzeigeeinrichtung 209 ist hierbei sichtbar an einer Oberfläche des Relaismoduls 101 angeordnet. Die Anzeigeeinrichtung 209 kann eine LED sein, die zwischen den Zuständen "an" und "aus" wechseln kann. Ist die LED "an", so befindet sich das Relais 102 in dem zweiten Schaltzustand. Ist die LED "aus", so befindet sich das Relais 102 in dem ersten Schaltzustand. Die LED ist über einen Lichtwellenleiter zu der Oberfläche des Relaismoduls geführt. In einem weiteren Ausführungsbeispiel kann die Anzeigeeinrichtung 209 anders ausgestaltet sein oder entfallen.

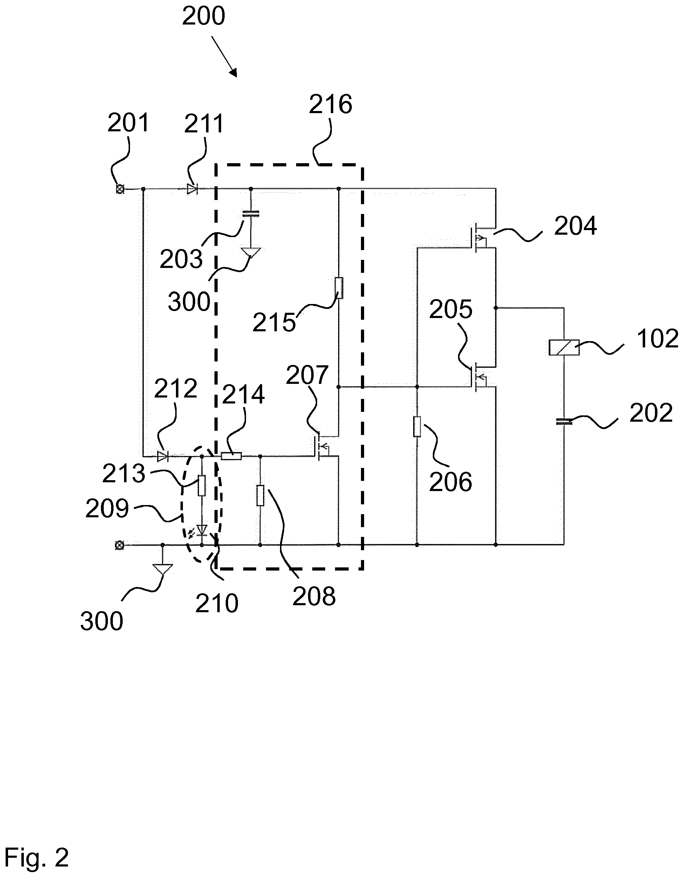

Fig. 2 zeigt die Steuerschaltung 200. An die Steuerschaltung 200 ist das bistabile Relais 102 angeschlossen. Die Steuerschaltung 200 weist einen Anschluss 201 auf, an dem eine Versorgungsspannung anliegen kann, um die Steuerschaltung 200 mit elektrischer Energie zu versorgen. Die Versorgungsspannung liegt hierbei über einem Potential 300 an, insbesondere Masse. Die Steuerschaltung 200 weist einen elektrischen Energiespeicher 202 und einen weiteren Energiespeicher 203 auf. Im gezeigten Ausführungsbeispiel ist der Energiespeicher 202 und der weitere Energiespeicher 203 jeweils ein Kondensator. Der Energiespeicher 202 ist ein Kondensator, dessen Kapazität so groß ist, dass durch einen Stromfluss beim Entladen des Energiespeichers 202 ausreichend Energie bereitgestellt werden kann, um das bistabile Relais 102 von dem zweiten Schaltzustand in den ersten Schaltzustand zurückzuschalten. Der Energiespeicher 202 ist ein Kondensator mit einer Kapazität von 100 µF. In einem weiteren Ausführungsbeispiel handelt es sich um einen andere Energiespeicher oder um einen Kondensator mit einer anderen Kapazität.

Die Steuerschaltung 200 weist ein erstes Schaltelement 204 und ein zweites Schaltelement 205 auf. Bei dem ersten Schaltelement 204 handelt es sich um einen normal sperrenden p-Kanal-MOSFET. Bei dem zweiten Schaltelement 205 handelt es sich um einen normal sperrenden n-Kanal-MOSFET. Das erste Schaltelement 204 und das zweite Schaltelement 205 sind so eingerichtet, dass sie wechselseitig leitend bzw. sperrend sind. In einem weiteren Ausführungsbeispiel sind das erste Schaltelement 204 und das zweite Schaltelement 205 Bipolartransistoren.

Der weitere Energiespeicher 203 dient dazu, bei einem Wegfall der Versorgungsspannung elektrische Energie zum Schalten des ersten Schaltelements 204 und des zweiten Schaltelements 205 bereitzustellen. Bei dem weiteren Energiespeicher 203 handelt es sich um einen Kondensator mit einer Kapazität von 4,7 µF. In einem weiteren Ausführungsbeispiel handelt es sich um einen andere Energiespeicher oder um einen Kondensator mit einer anderen Kapazität.

Die Steuerschaltung 200 weist einen Pull-down-Widerstand 206 auf. Der Pull-down-Widerstand 206 dient dazu, dass das erste Schaltelement 204 und das zweite Schaltelement 205 ein vorteilhaftes Schaltverhalten aufweisen. Handelt es sich bei dem ersten Schaltelement 204 und bei dem zweiten Schaltelement 205 um einen Bipolartransistor anstatt eines MOSFETs, so kann der Pull-down-Widerstand 206 entsprechend entfallen.

Das erste Schaltelement 204 weist einen ersten Steueranschluss auf. Das zweite Schaltelement 205 weist einen zweiten Steueranschluss auf. Über den ersten Steueranschluss, insbesondere Gate-Anschluss, kann das erste Schaltelement gesteuert werden. Über den zweiten Steueranschluss, insbesondere Gate-Anschluss, kann das zweite Schaltelement gesteuert werden.

Die Steuerschaltung 200 weist ein drittes Schaltelement 207 auf. Beim dritten Schaltelement 207 handelt es sich ebenfalls um einen normal sperrenden n-Kanal-MOSFET. In einem weiteren Ausführungsbeispiel handelt es sich bei dem dritten Schaltelement 207 um einen anderen MOSFET oder um einen Bipolartransistor. Das dritte Schaltelement 207 ist über einen Vorwiderstand 214 mit dem Anschluss 201 verbunden.

Die Steuerschaltung 200 weist einen zweiten Pull-down-Widerstand 208 auf, der an einen dritten Steueranschluss des dritten Schaltelements 207 angeschlossen ist und diesen mit einem Potential 300, insbesondere Masse, verbindet.

Das erste Schaltelement 204 ist zwischen das bistabile Relais 102 und den Anschluss 201 geschaltet, so dass durch das erste Schaltelement 204 ein elektrischer Strompfad zwischen dem Anschluss 201 und dem bistabilen Relais 102 geschaltet werden kann. Das zweite Schaltelement 205 ist zwischen dem ersten Schaltelement 204 und dem bistabilen Relais 102 angeschlossen und mit dem Potential 300 elektrisch verbunden. Das zweite Schaltelement 205 kann somit das bistabile Relais 102 elektrisch mit dem Potential 300 verbinden, wenn das zweite Schaltelement 205 leitend geschaltet ist.

Der erste Steueranschluss des ersten Schaltelements 204 und der zweite Steueranschluss des zweiten Schaltelements 205 sind an das dritte Schaltelement 207 angeschlossen. Durch das dritte Schaltelement 207 lassen sich somit gleichzeitig das erste Schaltelement 204 und das zweite Schaltelement 205 schalten.

Der dritte Steueranschluss des dritten Schaltelements 207 ist elektrisch mit dem Anschluss 201 verbunden und wird somit durch die Versorgungsspannung versorgt. Das heißt, liegt die Versorgungsspannung an der Steuerschaltung 200 an, liegt eine Schaltspannung an dem dritten Steueranschluss des dritten Schaltelements 207 an. Das dritte Schaltelement 207 zeiht somit den ersten Steueranschluss des ersten Schaltelement 204 und den zweiten Steueranschluss des zweiten Schaltelements 205 auf das Potential 300. Der erste Schaltelement 204 ist hierbei leitend geschaltet. Das zweite Schaltelement 205 ist hierbei sperrend geschaltet.

Die Steuerschaltung 200 weist eine Überwachungsschaltung auf, die das dritte Schaltelement 207 und den weiteren Energiespeicher 203 umfasst und eingerichtet ist, die Versorgungsspannung zu überwachen und bei einem Wegfall der Versorgungsspannung das erste Schaltelement 204 und das zweite Schaltelement 205 zu schalten, um das bistabile Relais 102 in den sichern ersten Schaltzustand zurückzuversetzen.

Liegt eine Versorgungsspannung an dem Anschluss 201 an, liegt eine Schaltspannung zum Schalten des dritten Schaltelements 207 an. Hierdurch wird das erste Schaltelement 204 leitend geschaltet und das zweite Schaltelement 205 sperrend geschaltet. Auf diese Weise kann ein Strom von dem Anschluss 201 durch das erste Schaltelement 204 und durch das bistabile Relais 102 in den Energiespeicher 202 fließen. Durch den Stromfluss durch das bistabile Relais 102 wird das bistabile Relais 102 von dem ersten Schaltzustand in den zweiten Schaltzustand geschaltet. Ist der Energiespeicher 202 vollständig geladen, so reduziert sich der Stromfluss auf einen geringen Haltungsstrom zum Halten der Ladung im Energiespeicher 202. Der Haltungsstrom ist hierbei im µA-Bereich und vernachlässigbar klein im Vergleich zu einem Haltestrom für ein gewöhnliches Relais, bei dem die Spule dauerhaft durchflossen werden muss, um einen Anker anzuziehen. Da das bistabile Relais 102 die Schaltstellung beibehält, auch wenn kein Steuerstrom durch das bistabile Relais 102 fließt, ist die Leistungsaufnahme der Steuerschaltung 200 sehr gering, solange das bistabile Relais 102 nicht geschaltet werden soll.

Durch die Versorgungsspannung zwischen dem Anschluss 201 und dem Potential 300 wird zusätzlich eine Anzeigeeinrichtung 209 angesteuert. Die Anzeigeeinrichtung 209 umfasst eine LED 210 und einen Vorwiderstand 213 und zeigt an, dass die Versorgungsspannung an der Steuerschaltung 200 anliegt und dass somit das bistabile Relais 102 in den zweiten Schaltzustand geschaltet ist. In einem weiteren Ausführungsbeispiel umfasst die Anzeigeeinrichtung 209 ein anderes Anzeigeelement oder ein anderes Anzeigesignal, das ein Benutzer oder eine Sicherung informiert, in welchem Schaltzustand sich das bistabile Relais 102 befindet.

Fällt die Versorgungsspannung zwischen dem Anschluss 201 und dem Potential 300 ab, beispielsweise durch einen Stromausfall, so würde in einer konventionellen Schaltung keine Energie mehr bereitstehen, um das bistabile Relais 102 zurück in den ersten Schaltzustand zu schalten.

Durch den Wegfall der Versorgungsspannung schaltet das dritte Schaltelement 207 in eine sperrende Schaltstellung.

Der weitere Energiespeicher 203 wird nicht mehr von der Versorgungsspannung auf einem geladenen Niveau gehalten. Durch den weiteren Energiespeicher 203 liegt über einen Spannungsteiler umfassen einen Widerstand 215 und den Pull-Down-Widerstand 206 an dem ersten Schaltelement 204 und dem zweiten Schaltelement 205 gleichzeitig eine Schaltspannung an. Hierdurch wird ein Strompfad von dem Energiespeicher 202 durch das bistabile Relais 102 in Richtung Potential 300 leitend geschaltet. Die in dem Energiespeicher 202 gespeicherte Energie fließt als Entladestrom durch das bistabile Relais 102 in Richtung Potential 300 ab. Durch den Stromfluss durch das bistabile Relais 102 wird das bistabile Relais 102 von dem zweiten Schaltzustand zurück in den ersten Schaltzustand geschaltet. Somit ist das bistabile Relais in einem sicheren Schaltzustand.

Die Steuerschaltung 200 umfasst eine erste Diode 211 und eine zweite Diode 212. Die erste Diode 211 ist zwischen den Anschluss 201 und den weiteren Energiespeicher 203 sowie das erste Schaltelement 204 geschaltet. Die zweite Diode 212 ist zwischen den Anschluss 201 und das dritte Schaltelement 207 geschaltet. Die erste Diode 211 stellt somit sicher, dass bei einem Wegfall der Versorgungsspannung die Energie aus dem weiteren Energiespeicher 203 das erste Schaltelement 204 und das zweite Schaltelement 205 schaltet und nicht über die Anzeigeeinrichtung 209 abfließt. Des Weiteren verhindert die erste Diode 211 einen Rückstrom in eine Spannungsquelle für die Versorgungsspannung. Die zweite Diode 212 ist vor die Anzeigeeinrichtung 209 und das dritte Schaltelement 207 geschaltet und verhindert auf diesem Strompfad einen Rückstrom.

Die Anzeigeeinrichtung 209 verbraucht eine Leistung mit ungefähr 2 mA, bei beispielsweise konstant 24V. Diese geringe Leistung kann zur Überwachungssicherheit der Stromsteuerschaltung aufgewendet werden. In einem weiteren Ausführungsbeispiel entfällt die Anzeigeeinrichtung 209.

### Bezugszeichenliste

- 100: Schaltungsanordnung
- 101: Relaismodul
- 102: bistabiles Relais
- 200: Steuerschaltung
- 201: Anschluss
- 202: Energiespeicher
- 203: weiterer Energiespeicher
- 204: erstes Schaltelement
- 205: zweites Schaltelement
- 206: Pull-down-Widerstand
- 207: drittes Schaltelement
- 208: Pull-down-Widerstand
- 209: Anzeigeeinrichtung
- 210: LED
- 211: erste Diode
- 212: zweite Diode
- 213: Vorwiderstand
- 214: Vorwiderstand
- 215: Widerstand
- 216: Überwachungsschaltung
- 300: Potential

## Patentansprüche

1. Steuerschaltung (200) zum Steuern eines bistabilen Relais (102), wobei das bistabile Relais (102) einen ersten Schaltzustand und einen zweiten Schaltzustand aufweist, wobei die Steuerschaltung (200) von einer Versorgungsspannung versorgbar ist, umfassend:
ein erstes Schaltelement (204) und ein zu dem ersten Schaltelement (204) in Reihe angeordnetes zweites Schaltelement (205);
einen Schaltungszweig mit einem Energiespeicher (202), wobei der Schaltungszweig parallel zu dem zweiten Schaltelement (205) angeordnet ist und wobei das bistabile Relais (102) in dem Schaltungszweig anordenbar ist;
wobei das erste Schaltelement (204) eingerichtet ist, einen Ladestrom des Energiespeichers (202) durch das bistabile Relais (102) zu führen, wenn die Versorgungsspannung an der Steuerschaltung (200) anliegt, um das bistabile Relais (102) in den zweiten Schaltzustand zu versetzen; und
wobei das zweite Schaltelement (205) eingerichtet ist, einen Entladestrom des Energiespeichers (202) durch das bistabile Relais (102) zu führen, wenn die Versorgungsspannung von der Steuerschaltung (200) getrennt ist, um das bistabile Relais (102) in den ersten Schaltzustand zu versetzen;
umfassend eine Überwachungsschaltung (216), die eingerichtet ist, einen Wegfall der Versorgungsspannung zu erfassen und hierauf das erste Schaltelement (204) und das zweite Schaltelement (205) zu schalten,
**dadurch gekennzeichnet, dass** die Überwachungsschaltung (216) einen weiteren Energiespeicher (203) umfasst, der eingerichtet ist, eine Energie zum Schalten des ersten Schaltelements (204) und des zweiten Schaltelements (205) bereitzustellen.

2. Steuerschaltung (200) nach Anspruch 1, wobei die Steuerschaltung (200) eine Diode (211) umfasst, die dem ersten Schaltelement (204) und dem zweiten Schaltelement (205) vorgeschaltet ist.

3. Steuerschaltung (200) nach Anspruch 1 oder 2, wobei die Überwachungsschaltung (216) ein drittes Schaltelement (207) umfasst, das eingerichtet ist, das erste Schaltelement (204) und das zweite Schaltelement (205) zu schalten, wenn die Versorgungsspannung von der Steuerschaltung (200) getrennt wird.

4. Steuerschaltung (200) nach einem der vorstehenden Ansprüche, umfassend eine Anzeigeeinrichtung (209), die eingerichtet ist, den ersten Schaltzustand des bistabilen Relais (102) anzuzeigen.

5. Steuerschaltung (200) nach einem der vorstehenden Ansprüche, wobei der Energiespeicher (202) einen Kondensator umfasst.

6. Steuerschaltung (200) nach einem der vorstehenden Ansprüche, wobei das erste Schaltelement (204) und das zweite Schaltelement (205) jeweils ein MOSFET oder ein Bipolartransistor sind.

7. Steuerschaltung (200) nach einem der vorstehenden Ansprüche, wobei das erste Schaltelement (204) und das zweite Schaltelement (205) gleichzeitig schaltbar angeordnet sind, wobei das erste Schaltelement (204) und das zweite Schaltelement (205) unterschiedliche Schaltzustände aufweisen.

8. Schaltungsanordnung (100) mit einer Steuerschaltung (200) nach einem der Ansprüche 1 bis 7 und einem bistabilen Relais (102), wobei das bistabile Relais (102) mit der Steuerschaltung (200) elektrisch verbunden ist, sodass das bistabile Relais (102) von dem zweiten Schaltzustand in den ersten Schaltzustand versetzt wird, wenn die Versorgungsspannung von der Steuerschaltung (200) getrennt wird.

9. Schaltungsanordnung (100) nach Anspruch 8, umfassend ein Relaismodul (101), wobei das Relaismodul (101) die Steuerschaltung (200) umfasst und das bistabile Relais (102) an dem Relaismodul (101) angeordnet ist.

10. Schaltungsanordnung (100) nach Anspruch 9, wobei das bistabile Relais (102) lösbar auf das Relaismodul (101) aufgesteckt ist.

11. Schaltungsanordnung (100) nach einem der Ansprüche 8 bis 10, wobei das bistabile Relais (102) einspulig ist.

12. Schaltungsanordnung (100) nach einem der Ansprüche 8 bis 11, wobei das bistabile Relais (102) einen Kontaktsatz oder zwei Kontaktsätze umfasst.

13. Schaltungsanordnung (100) nach einem der Ansprüche 8 bis 12, wobei der erste Schaltzustand ein Aus-Zustand und der zweite Schaltzustand ein Betriebszustand ist.

## Claims

1. Control circuit (200) for controlling a bistable relay (102), wherein the bistable relay (102) comprises a first switching state and a second switching state, wherein the control circuit (200) is suppliable by a supply voltage, the control circuit comprising:
a first switching element (204) and a second switching element (205) arranged in series with the first switching element (204);
a circuit branch with an energy store (202), wherein the circuit branch is arranged parallel to the second switching element (205) and wherein the bistable relay (102) is arrangeable in the circuit branch;
wherein the first switching element (204) is configured to conduct a charging current of the energy store (202) through the bistable relay (102) when the supply voltage is applied to the control circuit (200) in order to switch the bistable relay (102) to the second switching state; and
wherein the second switching element (205) is configured to conduct a discharge current of the energy store (202) through the bistable relay (102) when the supply voltage is disconnected from the control circuit (200) in order to switch the bistable relay (102) to the first switching state;
comprising a monitoring circuit (216), which is configured to detect a loss of the supply voltage and to switch the first switching element (204) and the second switching element (205) hereupon,
**characterized in that** the monitoring circuit (216) comprises a further energy store (203), which is configured to provide an energy for switching the first switching element (204) and the second switching element (205).

2. Control circuit (200) according to claim 1, wherein the control circuit (200) comprises a diode (211), which is connected upstream of the first switching element (204) and the second switching element (205).

3. Control circuit (200) according to claim 1 or 2, wherein the monitoring circuit (216) comprises a third switching element (207), which is configured to switch the first switching element (204) and the second switching element (205) when the supply voltage is disconnected from the control circuit (200).

4. Control circuit (200) according to one of the preceding claims, comprising a display device (209), which is configured to display the first switching state of the bistable relay (102).

5. Control circuit (200) according to one of the preceding claims, wherein the energy store (202) comprises a capacitor.

6. Control circuit (200) according to one of the preceding claims, wherein the first switching element (204) and the second switching element (205) are each a MOSFET or a bipolar transistor.

7. Control circuit (200) according to one of the preceding claims, wherein the first switching element (204) and the second switching element (205) are arranged to be switchable at the same time, wherein the first switching element (204) and the second switching element (205) comprise different switching states.

8. Circuit arrangement (100) with a control circuit (200) according to one of claims 1 to 7 and a bistable relay (102), wherein the bistable relay (102) is electrically connected to the control circuit (200) so that the bistable relay (102) is switched from the second switching state to the first switching state when the supply voltage is disconnected from the control circuit (200).

9. Circuit arrangement (100) according to claim 8, comprising a relay module (101), wherein the relay module (101) comprises the control circuit (200) and the bistable relay (102) is arranged on the relay module (101).

10. Circuit arrangement (100) according to claim 9, wherein the bistable relay (102) is releasably attached on the relay module (101).

11. Circuit arrangement (100) according to one of the claims 8 to 10, wherein the bistable relay (102) is single coil.

12. Circuit arrangement (100) according to one of the claims 8 to 11, wherein the bistable relay (102) comprises one set of contacts or two sets of contacts.

13. Circuit arrangement (100) according to one of the claims 8 to 12, wherein the first switching state is an off state and the second switching state is an operating state.

## Revendications

1. Circuit de commande (200) pour commander un relais bistable (102), dans lequel le relais bistable (102) comprend un premier état de commutation et un deuxième état de commutation, dans lequel le circuit de commande (200) est alimenté par une tension d'alimentation, la commande circuit comprenant :
un premier élément de commutation (204) et un deuxième élément de commutation (205) disposés en série avec le premier élément de commutation (204) ;
une branche de circuit dotée d'un accumulateur d'énergie (202), la branche de circuit étant disposée parallèlement au deuxième élément de commutation (205) et le relais bistable (102) pouvant être disposé dans la branche de circuit ;
dans lequel le premier élément de commutation (204) est configuré pour conduire un courant de charge de l'accumulateur d'énergie (202) à travers le relais bistable (102) lorsque la tension d'alimentation est appliquée au circuit de commande (200) afin de commuter le relais bistable ( 102) au deuxième état de commutation ; et
dans lequel le deuxième élément de commutation (205) est configuré pour conduire un courant de décharge de l'accumulateur d'énergie (202) à travers le relais bistable (102) lorsque la tension d'alimentation est déconnectée du circuit de commande (200) afin de commuter le relais bistable ( 102) au premier état de commutation ;
comprenant un circuit de surveillance (216) qui est configuré pour détecter une défaillance de la tension d'alimentation et pour commuter le premier élément de commutation (204) et le deuxième élément de commutation (205),
**caractérisé en ce que** le circuit de surveillance (216) comprend un autre accumulateur d'énergie (203), qui est configuré pour fournir une énergie pour commuter le premier élément de commutation (204) et le deuxième élément de commutation (205).

2. Circuit de commande (200) selon la revendication 1, le circuit de commande (200) comprenant une diode (211) qui est connectée en amont du premier élément de commutation (204) et du deuxième élément de commutation (205).

3. Circuit de commande (200) selon la revendication 1 ou 2, dans lequel le circuit de surveillance (216) comprend un troisième élément de commutation (207), qui est configuré pour commuter le premier élément de commutation (204) et le deuxième élément de commutation (205) lorsque la tension d'alimentation est déconnectée du circuit de commande (200).

4. Circuit de commande (200) selon l'une des revendications précédentes, comprenant un dispositif d'affichage (209), qui est configuré pour afficher le premier état de commutation du relais bistable (102).

5. Circuit de commande (200) selon l'une des revendications précédentes, dans lequel le stockeur d'énergie (202) comprend un condensateur.

6. Circuit de commande (200) selon l'une des revendications précédentes, dans lequel le premier élément de commutation (204) et le deuxième élément de commutation (205) sont chacun un MOSFET ou un transistor bipolaire.

7. Circuit de commande (200) selon l'une des revendications précédentes, le premier élément de commutation (204) et le deuxième élément de commutation (205) étant agencés pour être commutables en même temps, le premier élément de commutation (204) et le deuxième élément de commutation (205) comprenant des états de commutation différents.

8. Agencement de circuit (100) avec un circuit de commande (200) selon l'une des revendications 1 à 7 et un relais bistable (102), dans lequel le relais bistable (102) est connecté électriquement au circuit de commande (200) de sorte que le relais bistable (102) passe du deuxième état de commutation au premier état de commutation lorsque la tension d'alimentation est déconnectée du circuit de commande (200).

9. Agencement de circuit (100) selon la revendication 8, comprenant un module relais (101), dans lequel le module relais (101) comprend le circuit de commande (200) et le relais bistable (102) est disposé sur le module relais (101).

10. Agencement de circuit (100) selon la revendication 9, le relais bistable (102) étant fixé de manière amovible sur le module de relais (101).

11. Agencement de circuit (100) selon l'une des revendications 8 à 10, dans lequel le relais bistable (102) est à bobine unique.

12. Agencement de circuit (100) selon l'une des revendications 8 à 11, dans lequel le relais bistable (102) comprend un jeu de contacts ou deux jeux de contacts.

13. Agencement de circuit (100) selon l'une des revendications 8 à 12, dans lequel le premier état de commutation est un état d'arrêt et le deuxième état de commutation est un état de fonctionnement.
